Europäisches Patentamt

European Patent Office

Office européen des brevets

(19)

(11) Numéro de publication: **0 097 560**

**A1**

## (12) DEMANDE DE BREVET EUROPEEN

(21) Numéro de dépôt: **83401129.8**

(22) Date de dépôt: **03.06.83**

(51) Int. Cl.³: **B 01 D 53/18**

(30) Priorité: **08.06.82 FR 8209971**

(43) Date de publication de la demande:
**04.01.84 Bulletin 84/1**

(84) Etats contractants désignés:
**AT BE CH DE GB IT LI LU NL SE**

(71) Demandeur: **LAGUILHARRE S.A.**
**2, avenue du 18 Juin 1940**
**F-92500 Rueil Malmaison(FR)**

(72) Inventeur: **Ciboit, Jacques Jean**
**164 Bis, rue de l'Université**
**F-75007 Paris(FR)**

(74) Mandataire: **Kedinger, Jean-Paul et al,**
**c/o Cabinet Malemont 42, avenue du Président Wilson**
**F-75116 Paris(FR)**

(54) Dispositif d'absorption d'un gaz tel que NH3, SO2 ou la vapeur d'eau, par un liquide tel que l'eau.

(57) La présente invention a pour objet un dispositif d'absorption d'un gaz tel que $NH_3$, $SO_2$ ou la vapeur d'eau, par un liquide tel que l'eau, constitué essentiellement par une enceinte (1) pourvue d'une arrivée (8) de gaz, de moyens de répartition (12, 12a) tels des tuyères, alimentés en liquide assurant la répartition de ce liquide dans l'enceinte, d'un moyen d'extraction (9) du mélange liquide-gaz absorbé et d'un orifice (5) d'evacuation du gaz non absorbé.

Ce dispositif se caractérise en ee qui'il comporte en outre des moyens autonomes (2, 13, 14, 15) d'ajustement du nombre de moyens de répartition opérationnels en fonction du débit du liquide à répartir.

FIG.1

EP 0 097 560 A1

Dispositif d'absorption d'un gaz tel que $NH_3$, $SO_2$ ou la vapeur d'eau, par un liquide tel que l'eau

0097560

La présente invention a pour objet un nouveau dispositif d'absorption d'un gaz tel que $NH_3$, $SO_2$ ou la vapeur d'eau, par un liquide tel que l'eau, constitué essentiellement par une enceinte pourvue d'une arrivée de gaz, de moyens de répartition, tels des tuyères, alimentés en liquide et assurant la répartition de ce liquide dans l'enceinte, d'un moyen d'extraction du mélange liquide-gaz absorbé et d'un orifice d'évacuation du gaz non absorbé.

Dans les dispositifs connus de ce type, et il s'agira notamment des condenseurs par mélange, il est particulièrement difficile d'ajuster le débit en liquide au débit de gaz à traiter. En effet, dans ces dispositifs tous les moyens de répartition sont alimentés simultanément par le liquide et ils ne fonctionnent correctement que si le débit de liquide ne descend pas au-dessous d'un seuil critique ; il s'ensuit que si on y règle la quantité de liquide à celle juste nécessaire à la quantité de gaz à traiter, le débit de liquide peut devenir inférieur au seuil critique ce qui a des conséquences désastreuses sur la qualité et la régularité de la répartition du liquide et, partant, sur la qualité de l'opération d'absorption du gaz par le liquide.

Dans le but de pallier à ces inconvénients, la présente invention propose un dispositif du type de celui rappelé en préambule et qui se caractérise en ce qu'il comporte en outre des moyens autonomes d'ajustement du nombre de moyens de répartition opérationnels en fonction du débit du liquide à répartir.

On comprendra que l'invention permet sans intervention extérieure, d'ajuster la quantité de liquide à utiliser à la quantité de gaz à traiter, en ne rendant opérationnel que le nombre juste nécessaire de moyens de répartition tout en assurant à ces moyens un fonctionnement correct. Le dispositif selon l'invention est donc d'une souplesse d'utilisation particulièrement intéressante et il permet des économies substantielles en liquide.

Les moyens d'ajustement seront plus précisément constitués par une ou plusieurs chambres de réception du liquide dans chacune desquelles débouche l'entrée d'au moins un moyen de répartition, l'une au moins desdites chambres étant en relation avec une arrivée du liquide, lesdites entrées étant disposées dans un même plan horizontal ou en tout ou partie dans des plans horizontaux de niveaux différents, cette dernière condition devant nécessairement être remplie quand il n'y a qu'une chambre ou plusieurs chambres indépendantes, et des moyens étant éventuellement prévus pour assurer le déversement du liquide d'une chambre vers l'autre.

Le liquide s'élève dans la chambre de réception en relation avec l'arrivée de liquide, jusqu'à atteindre l'entrée d'un ou plusieurs moyens de répartition associés à cette chambre qui deviennent alors opérationnels. Si le débit de liquide évacué par lesdits moyens est égal à celui du liquide arrivant dans la chambre, le niveau du liquide se stabilise. Quand le débit de gaz à traiter augmente, il faut augmenter la quantité de liquide dans la même proportion et le niveau de liquide monte alors dans la chambre. Si cette chambre comporte plusieurs moyens de répartition dont les entrées respectives sont disposées à des hauteurs différentes, un ou plusieurs d'entre eux deviennent opérationnels en plus de celui ou de ceux déjà opérationnels, ce qui permet l'absorption du supplément de gaz. Par ailleurs, si cette chambre ne comporte que des moyens de répartition dont les entrées respectives sont disposées à la même hauteur, le liquide va monter dans ladite chambre jusqu'à atteindre les moyens de déversement et venir ainsi alimenter une seconde chambre de réception et, partant, rendre opérationnels le ou les moyens de répartition associés à cette seconde chambre. Bien entendu, le même processus peut s'établir entre cette dernière et une troisième chambre de réception et ainsi de suite jusqu'à ce que l'augmentation de débit du liquide soit absorbée par les moyens de répartition rendus progressivement opérationnels.

La chambre ou les chambres de réception du liquide pourront être disposées à l'intérieur et/ou à l'extérieur de l'enceinte.

Avantageusement, la chambre de réception de liquide en relation avec l'arrivée de liquide est pourvue d'une ouverture raccordée à l'orifice d'évacuation du gaz non absorbé par un conduit qui s'étend en partie dans cette chambre, cette ouverture étant de préférence située à proximité des moyens de répartition opérationnels en premier.

Avantageusement également, l'orifice d'évacuation du gaz non absorbé est soit situé à proximité des moyens de répartition opérationnels en premier, soit en relation avec un conduit débouchant à proximité des moyens de répartition opérationnels en premier.

Ainsi, en disposant l'ouverture, l'orifice d'évacuation du gaz non absorbé ou l'extrémité libre du conduit relié à cet orifice, au voisinage des moyens de répartition opérationnels en premier, on évitera toute fuite de gaz à absorber.

Conformément à une première variante préférée de l'invention, l'enceinte est scindée en deux compartiments indépendants, un compartiment supérieur qui contient la ou les chambres de réception du liquide et dans lequel débouche l'arrivée de liquide et un compartiment inférieur qui porte le moyen d'extraction et dans lequel débouche l'arrivée de gaz à absorber.

Ainsi, le dispositif selon l'invention pourra comporter au moins une chambre de réception du liquide en relation avec l'arrivée de liquide, cette chambre étant disposée intérieurement à l'enceinte et notamment dans le compartiment supérieur, les entrées des mcyens de répartition débouchant dans chaque chambre étant situées, entout ou partie, dans des plans horizontaux de niveaux différents.

Par ailleurs, le fond du compartiment supérieur pourra porter au moins un élément de séparation qui définit dans ce compartiment au moins deux chambres de réception du liquide communiquant à leur partie supérieure.

En plus ou à la place de cet élément de séparation, le fond du compartiment supérieur pourra porter au moins un élément de séparation qui s'étend de ce fond jusqu'à la paroi supérieure de l'enceinte pour définir au moins deux chambres de réception du liquide, ledit élément de séparation étant pourvu d'au moins un orifice de débordement qui assure la communication entre les chambres de réception contiguës.

L'élément de séparation peut dans ce cas être constitué par une virole.

Quand le débit en gaz à absorber augmente, on augmente le débit en liquide et les moyens de répartition associés à la chambre en relation avec l'arrivée de liquide ne suffisent plus à l'évacuation du supplément de liquide arrivant dans cette chambre. Il s'ensuit que le niveau du liquide va monter dans cette dernière jusqu'à atteindre les orifices de débordement de l'élément de séparation ou le sommet de l'élément de séparation quand ce dernier ne comporte pas de tels orifices et à partir de ce moment le liquide s'écoule par surverse dans la chambre de réception contiguë pour venir alimenter les moyens de répartition associés à cette dernière et les rendre opérationnels. Si les moyens de répartition de cette seconde chambre ne sont toujours pas suffisants pour absorber l'augmentation du débit du liquide, il va intervenir dans cette seconde chambre le même processus que celui intervenu dans la première et ainsi de suite jusqu'à ce qu'il y ait équilibre entre la quantité de liquide arrivant dans la première chambre et la quantité de liquide répartie dans le compartiment inférieur par les moyens de répartition.

Selon un premier mode de réalisation de la première variante, le fond du compartiment supérieur est constitué par une plaque plane disposée transversalement dans l'enceinte, de préférence dans la partie haute de cette dernière, cette plaque portant les moyens de répartition.

Selon un second mode de réalisation de la première variante, le fond du compartiment supérieur est constitué par une plaque conformée en gradins sur une partie au moins de sa surface.

La plaque pourra en particulier être constituée par deux séries de gradins convergeant vers le bas et mieux encore, par des gradins concentriques convergeant vers le bas.

Il est à noter que le compartiment supérieur pourra être pourvu de l'orifice d'évacuation du gaz non absorbé, le fond de ce compartiment supérieur ou la plaque constituant ce fond, étant dans ce cas pourvu d'une ouverture raccordée audit orifice.

De même, le compartiment inférieur pourra être pourvu de l'orifice d'évacuation du gaz non absorbé, cet orifice étant dans ce cas soit situé à proximité du fond du compartiment supérieur ou de la plaque constituant ce fond, soit en relation avec un conduit débouchant sous et à proximité de ce fond ou de cette plaque.

Si le dispositif selon l'invention comporte plusieurs chambres de réception du liquide communiquant entre elles, la chambre de réception du liquide en relation avec l'arrivée de liquide sera de préférence celle dans laquelle débouchent les entrées des moyens de répartition disposés à la distance la plus courte de ladite ouverture, dudit orifice quand celui-ci est porté par le compartiment inférieur ou de l'extrémité libre du conduit en relation avec ledit orifice.

Dans ce cas en effet, les moyens de répartition opérationnels en premier seront ceux disposés au voisinage immédiat de ladite ouverture, dudit orifice ou de ladite extrémité libre. On évitera ainsi toute fuite de gaz à absorber par l'orifice d'évacuation du gaz non absorbé et l'absorption sera alors réalisée de manière optimale.

Afin de bien canaliser le liquide vers la ou les chambres destinées à recevoir le liquide, on pourra disposer un déflecteur autour de l'arrivée de liquide, ce déflecteur s'ouvrant au-dessus de ladite ou desdites chambres de réception devant être alimentées en liquide.

De même, lorsque le fond du compartiment supérieur est constitué par une plaque conformée en gradins, un déflecteur pourra être disposé autour de l'arrivée de liquide, ce déflecteur s'ouvrant au-dessus des moyens de répartition situés à la distance la plus courte de l'ouverture, de l'orifice quand celui-ci est porté par le compartiment inférieur ou de l'extrémité libre du conduit en relation avec ledit orifice.

Conformément à une seconde variante de l'invention, la ou les chambres de réception de liquide sont montées, intérieurement et/ou extérieurement, sur la paroi latérale de l'enceinte.

Avantageusement, la ou les chambres de réception sont constituées par une ou plusieurs chemises indépendantes s'étendant intérieurement ou extérieurement autour de la paroi latérale de l'enceinte ou par un ou plusieurs serpentins indépendants s'enroulant intérieurement ou extérieurement autour de la paroi latérale de l'enceinte, chaque chemise ou serpentin étant pourvu d'une

0097560

5

arrivée de liquide et les entrées des moyens de répartition débouchant dans chaque chemise ou serpentin à des hauteurs différentes.

Ainsi, c'est le moyen de répartition le plus bas de la chemise ou du serpentin qui est opérationnel en premier. Quand le débit en gaz à absorber augmente, on augmente simultanément le débit de l'arrivée de liquide. Le niveau de liquide va de ce fait monter dans ladite chemise ou ledit serpentin et il s'ensuit la mise en service progressive des moyens de répartition situés au-dessus du moyen de répartition déjà opérationnel et ce, jusqu'à ce qu'il y ait un nombre de moyens opérationnels suffisant pour absorber l'augmentation de débit de l'arrivée de liquide.

Il est évidemment recommandé que l'orifice d'évacuation du gaz non absorbé soit le plus éloigné possible de l'arrivée de gaz à absorber et/ou que les moyens de répartition opérationnels en premier soient situés le plus près possible de cette arrivée de gaz à absorber ou dudit orifice. Toutefois, l'enceinte comportera de préférence une paroi intérieure définissant avec la paroi latérale de ladite enceinte, un conduit ouvert à sa base et fermé à sa partie supérieure, l'orifice d'évacuation du gaz non absorbé étant situé dans la partie haute de ce conduit, l'arrivée de gaz à absorber débouchant dans l'enceinte en dehors de ce conduit et le ou les moyens de répartition opérationnels en premier étant disposés dans ledit conduit et dans un plan situé au-dessous dudit orifice.

Le gaz à absorber est ainsi en quelque sorte canalisé vers ces moyens de répartition.

Enfin, on préférera tout particulièrement que l'arrivée de gaz à absorber débouche dans la partie haute de l'enceinte et de préférence à un niveau situé au-dessus du ou des moyens de répartition opérationnels en dernier ; de cette manière en effet, la trajectoire du gaz à absorber passera au voiginage de tous les moyens de répartition ce qui rend l'absorption optimum.

Plusieurs modes d'exécution de la présente invention sont représentés à titre d'exemples sur le dessin annexé dans lequel :

- la figure 1 est une coupe longitudinale schématique d'un dispositif selon la première variante de l'invention et constitué par deux compartiments superposés et séparés par une plaque plane portant les moyens de répartition et une virole définissant deux chambres de réception du liquide communiquant par leur partie supérieure, ce dispositif étant plus précisément un condenseur de vapeur d'eau par mélange avec de l'eau,

- la figure 2 est une coupe schématique selon la ligne II-II de la figure 1,

- la figure 3 est une coupe longitudinale schématique de la partie haute du condenseur selon la figure 1, mais comportant trois chambres de réception du liquide et en outre une virole pourvue d'orifices de débordement et s'étendant de la plaque à la paroi supérieure du compartiment supérieur,

- la figure 4 est une coupe longitudinale schématique de la partie haute d'un condenseur selon la première variante de l'invention constitué par deux compartiments superposés et séparés par une plaque portant les moyens de répartition et conformée en gradins,

- la figure 5 est une coupe schématique selon la ligne V-V de la figure 4,

- la figure 6 est une coupe longitudinale schématique d'un condenseur selon la seconde variante de l'invention, dont la paroi latérale comporte une chemise portant les moyens de répartition, et

- la figure 7 est une coupe schématique selon la ligne VII-VII de la figure 6.

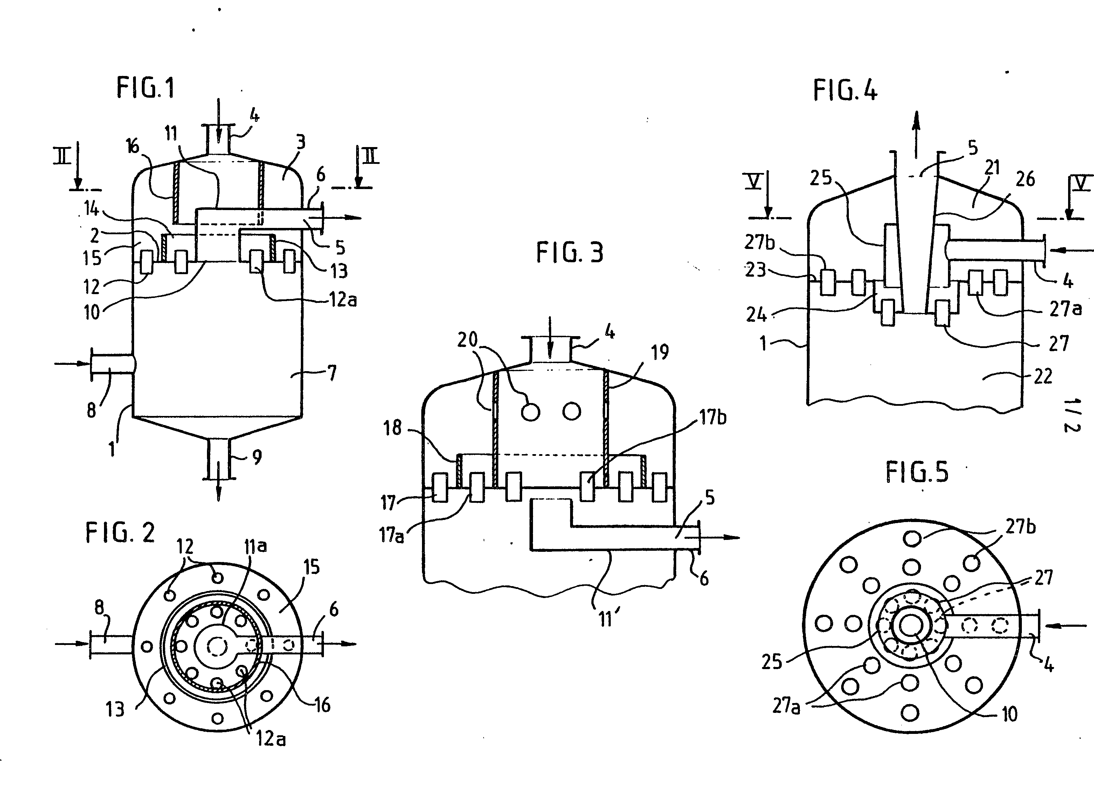

Le condenseur des figures 1 et 2 est constitué par une enceinte cylindrique 1 scindée par une plaque plane et circulaire 2 disposée transversalement dans la partie haute de cette enceinte, en un compartiment supérieur 3 dont la paroi supérieure porte en son centre une arrivée d'eau 4 et dont la paroi latérale porte un orifice 5 d'évacuation des incondensables relié par un conduit 6 soit à une source de vide (non représentée) si la condensation est réalisée sous pression réduite, soit à l'atmosphère si la condensation est réalisée sous pression, le conduit 6 étant muni dans ce dernier cas d'une vanne uni-directionnelle n'autorisant la circulation des fluides que dans le sens du condenseur vers l'atmosphère et en un compartiment inférieur 7 dans lequel débouche une arrivée de vapeur d'eau 8 et qui est pourvu à sa base d'un moyen d'extraction 9 d'eau chaude, tel qu'une pompe d'extraction ou une colonne barométrique par exemple. La plaque 2 est pourvue en son centre d'une ouverture circulaire 10 reliée par un raccord 11 à l'orifice 5, ce raccord présentant une partie cylindrique 11a dont l'axe longitudinal est perpendiculaire au plan de la plaque 2. Par ailleurs, cette plaque 2 porte des tuyères 12, 12a réparties sur deux cercles disposés concentriquement autour de l'ouverture 10, les tuyères .éférencées 12 étant celles situées sur le cercle de plus grand diamètre, l'entrée de ces tuyères débouchant dans le compartiment supérieur 3 et leur sortie débouchant dans le compartiment 7 ; en lieu et place de ces tuyères, il est possible d'utiliser tous autres moyens qui, sous l'effet de la seule gravité, sont aptes à répartir l'eau dans le compartiment 7, sous la forme d'un film ou de jets assurant un contact intime entre l'eau et la vapeur. Cette même plaque 2 porte également une virole 13 qui s'étend sur une partie de la hauteur du compartiment 3 et qui est disposée entre les tuyères 12 et les tuyères 12a. Cette virole 13 définit avec la partie cylindrique du raccord 11 une chambre annulaire cylindrique 14 dans laquelle débouchent les entrées des tuyères 12a. Cette même virole 13 définit avec la paroi latérale de l'enceinte 1, une chambre annulaire cylindrique 15 dans laquelle débouchent les entrées des tuyères 12. Enfin, la paroi supérieure du compartiment 3 porte une virole 16 disposée autour de l'arrivée d'eau 4 et d'un diamètre inférieur à celui de la virole 13, cette virole 16 définissant une chambre cylindrique s'ouvrant au-dessus de la chambre 14. Au moment de la mise en fonctionnement du condenseur, le débit d'eau dans l'arrivée 4 est réglé manuellement ou automatiquement de manière à ce qu'il soit suffisant pour condenser la vapeur d'eau pénétrant dans l'enceinte. L'eau nécessaire pour condenser la vapeur provenant de l'arrivée 8 pénètre dans le compartiment 3 par l'arrivée 4, cette eau étant canalisée par la virole 16 de manière à tomber exclusivement dans la chambre 14. Le niveau de l'eau monte dans cette dernière jusqu'à atteindre l'entrée des tuyères 12a qui sont alors alimentées en eau pour devenir opérationnelles. Si l'eau tombant dans la chambre 14 est évacué au fur et à mesure par les tuyères 12a, le niveau d'eau se stabilise dans cette chambre. Par contre, si le débit d'eau dans l'arrivée 4 est plus important parce que la quantité de vapeur à condenser est plus importante, les tuyères 12a ne suffisent plus à assurer l'évacuation de la totalité de l'eau pénétrant dans la chambre 14 ; le niveau d'eau monte alors dans cette dernière jusqu'à atteindre le sommet de la virole 13 et l'eau tombe par déversement dans la chambre 15 où son niveau va monter jusqu'à atteindre l'entrée des tuyères 12 qui deviennent opérationnelles à leur tour pour assurer la condensation totale recherchée. Bien entendu, pour conférer une souplesse d'utilisation encore meilleure au condenseur selon l'invention, il est possible de prévoir que des tuyères soient réparties sur plus de deux cercles concentriques et qu'il y ait plus d'une virole du type de la virole 13 ; par exemple, chaque série de tuyères disposées sur l'un des cercles concentriques pourra être séparée de la série de tuyères disposées sur le cercle concentrique suivant par une telle virole de manière à définir autant de chambre annulaires cylindriques qu'il y a de série de tuyères. Dans ces conditions, plus le débit de gaz à condenser et partant plus le débit d'eau augmente, plus le nombre de tuyères opérationnelles augmente, les tuyères opérationnelles en premier étant celles disposées dans la chambre annulaire cylindrique la plus proche de l'ouverture 10 et les tuyères devenant opérationnelles en dernier étant celles disposées dans la chambre annulaire cylindrique la plus éloignée de ladite ouverture. Le nombre et les dimensions des tuyères pourront être aisément choisis par l'Homme de Métier en fonction des besoins d'utilisation.

Dans le condenseur qui vient d'être décrit, ce sont les tuyères les plus proches de l'ouverture 10 qui sont opérationnelles en premier et c'est cette disposition qui permet une condensation optimale puisque le film ou les jets produits par ces tuyères assurent la condensation de la vapeur se trouvant à proximité immédiate de cette ouverture, évitant ainsi toute fuite de vapeur par l orifice  5. On pourrait toutefois envisager, mais au détriment du rendement de la condensation, que la chambre annulaire cylindrique recevant l'eau soit une chambre autre que celle disposée immédiatement autour de ladite ouverture 10, auquel cas la virole 16 est remplacée par un déflecteur entourant l'arrivée 4 mais débouchant au-dessus de la chambre choisie.

Le condenseur représenté par la figure 3 est de conception analogue à celui représenté par les figures 1 et 2. Il s'en distingue néanmoins (a) en ce que la plaque 2 porte des tuyères 17, 17a et 17b réparties sur trois cercles disposés concentriquement autour de l'ouverture 10, les tuyères référencées 17 étant celles situées sur le cercle de plus grand diamètre et les tuyères référencées 17b étant celles situées sur le cercle de plus petit diamètre, (b) en ce que la plaque 2 porte une virole 18 qui s'étend sur une partie de la hauteur du compartiment supérieur 3, cette virole étant disposée entre les tuyères 17 et les tuyères 17a,     (c) en ce que la plaque 2 porte également  une virole 19 pourvue d'orifices de débordement 20, cette virole 19 étant disposée entre les tuyères 17a et 17b et s'étendant jusqu'à la paroi supérieure du compartiment 3 de manière à entourer l'orifice par lequel l'arrivée 4 débouche dans ce compartiment 3 et (d) en ce que l'orifice 5 est porté par la paroi latérale du compartiment inférieur 7 et relié par un raccord 11' qui débouche sous et sensiblement au centre de la plaque 2, l'ouverture 10 ayant été supprimée. Les viroles 18 et 19 définissent ainsi dans ce dernier, trois chambres annulaires concentriques dans lesquelles débouchent respectivement les entrées des tuyères 17, des tuyères 17a et des tuyères 17b.

Le fonctionnement de ce condenseur est tout à fait analogue à celui du condenseur objet des figures 1 et 2. Ainsi, l'eau de l'arrivée 4 tombe dans la chambre annulaire associée aux tuyères 17b, le niveau monte dans cette chambre jusqu'à atteindre l'entrée de ces tuyères et celles-ci deviennent alors opérationnelles. Si le débit d'eau dans l'arrivée 4 est supérieur à celui des tuyères 17b, le niveau d'eau continue à monter dans ladite chambre jusqu'à atteindre les orifices de débordement 20 et l'eau se déverse alors dans la chambre annulaire associée aux tuyères 17a et ces dernières deviennent alors opérationnelles à leur tour. Enfin, si le débit d'eau dans l'arrivée est supérieur à celui des tuyères 17a, plus celui des tuyères 17b, les tuyères 17 vont elles également entrer en fonctionnement par déversement de l'eau de la chambre annulaire associée aux tuyères 17a vers la chambre annulaire associée aux tuyères 17.

Bien entendu, le condenseur qui vient d'être décrit pourrait comporter plus de trois séries de tuyères et plus d'une virole du type 19, sans pour cela sortir du cadre de l'invention.

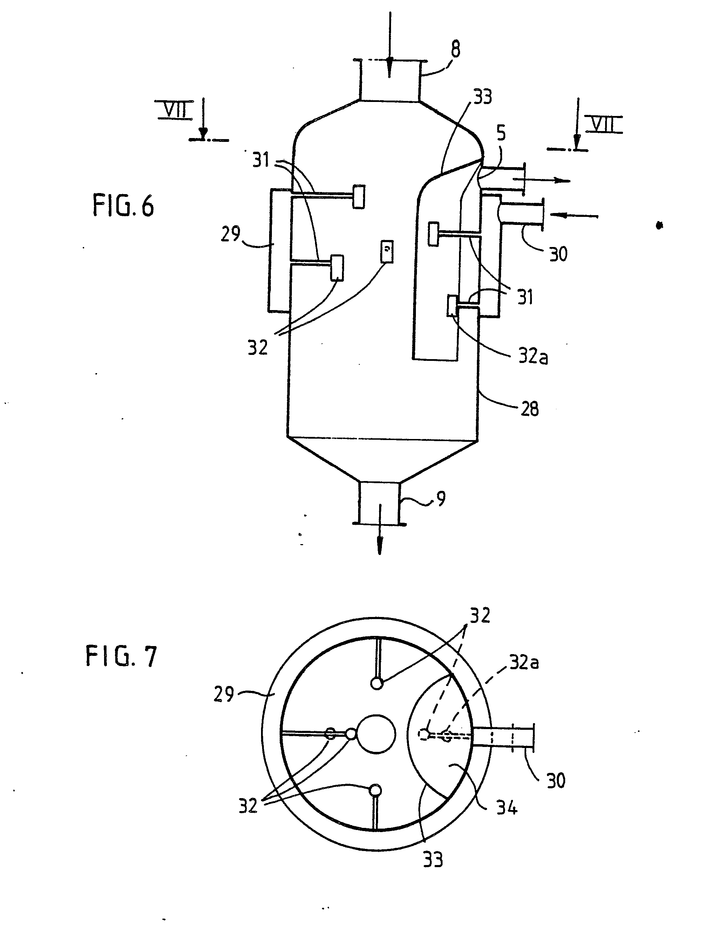

Le condenseur représenté par les figures 4 et 5 est pour sa part constitué par une enceinte cylindrique 1 scindée en un compartiment supérieur 21 et un compartiment inférieur 22 par une plaque circulaire 23 pourvue en son centre d'une dépression dirigée vers le bas définissant une chambre cylindrique 24. La paroi supérieure du compartiment supérieur 21 porte en son centre un orifice 5 d'évacuation des incondensables utilisé de la même manière que dans les condenseurs décrits précédemment ; la paroi latérale de ce compartiment porte par ailleurs une arrivée 4 d'eau qui se prolonge jusque dans ledit compartiment et vient déboucher dans un cylindre 25 fermé à sa partie supérieure et s'ouvrant dans (ou au-dessus de) la chambre 24. La base de cette dernière est pourvue en son centre d'une ouverture circulaire 10 raccordée par un conduit 26 traversant la face supérieure du cylindre 25, à l'orifice 5. Le compartiment inférieur 22 porte pour sa part une arrivée 8 de vapeur d'eau à condenser et un moyen d'extraction 9 (non représentés) identique à celui de la figure 1. La plaque 23 porte par ailleurs trois séries de tuyères (ou tout autre moyen équivalent) dont l'entrée débouche dans le compartiment 21 et la sortie débouche dans le compartiment 22. Une première série de tuyères 27 est portée par la base de la chambre 24 et répartie sur un cercle disposé concentriquement autour de l'ouverture circulaire 10. Les deux autres séries de tuyères 27a et 27b sont pour leur part réparties sur deux cercles disposés sur la plaque 23 et concentriquement autour de la chambre 24, les tuyères 27a étant celles réparties sur le cercle de plus petit diamètre.

L'eau pénétrant dans le compartiment 21 par l'arrivée 4 est canalisée par le cylindre 25 vers la chambre cylindrique 24. Le niveau monte dans cette dernière jusqu'à atteindre l'entrée des tuyères 27 qui deviennent alors opérationnelles. Si le débit d'eau arrivant dans la chambre 24 est égal au débit d'eau évacuée par les tuyères 27, le niveau d'eau se stabilise ; s'il est supérieur à celui des tuyères 27, l'eau va monter dans la chambre 24 et par conséquent dans le compartiment 21 jusqu'à atteindre l'entrée des tuyères 27a et 27b qui deviennent alors opérationnelles à leur tour.

Le condenseur qui vient d'être décrit ne sort pas du cadre de l'invention si la base de la chambre 24, au lieu de porter une ouverture 10, était elle aussi pourvue d'une dépression dirigée vers le bas et définissant à son tour une seconde chambre cylindrique, le même agencement pouvant se répéter plusieurs fois et la base de la chambre cylindrique située au point le plus bas portant l'ouverture 10. Dans ce cas, on disposerait d'une plaque 23 conformée en gradins, chacun de ces gradins portant une ou plusieurs séries de tuyères.

0097560

Les tuyères portées par le gradin le plus bas sont seules opérationnelles quand le débit en eau nécessaire à la condensatoin est faible, c'est-à-dire quand le débit en vapeur à condenser est faible ; quand le débit de vapeur à condenser est plus élevé, le débit d'eau nécessaire est lui aussi plus élevé et l'eau monte dans le compartiment 21 rendant progressivement opérationnelles les tuyères disposées sur les gradins suivants. Le niveau d'eau se stabilise quand le débit de l'eau arrivant dans ledit compartiment 21 est égal à celui de l'eau répartie dans le compartiment 22 par les tuyères.

La plaque 23 pourrait en outre porter un ou plusieurs éléments de séparation tels que la virole 13 ou 18 et/ou la virole 19 définies précédemment.

Le condenseur objet des figures 6 et 7 est quant à lui constitué par une enceinte cylindrique 28 dont la paroi supérieure porte en son centre une arrivée 8 de vapeur à condenser et dont la base est pourvue d'un moyen d'extraction 9 défini précédemment. La paroi latérale de l'enceinte 28 est entourée sur une partie de sa hauteur par une chemise 29 dans la partie haute de laquelle débouche une arrivée d'eau 30. Dans cette chemise 29 débouchent par ailleurs, à diverses hauteurs, des conduits horizontaux 31 associés respectivement à des tuyères 32 ou à des moyens de répartition équivalents, la tuyère la plus basse parmi ces tuyères 32, étant référencée 32a. La paroi latérale de l'enceinte 28 porte un orifice 5 d'évacuation des incondensables utilisé de la même manière que précédemment (voir commentaires relatifs aux figures 1 et 2), cet orifice étant situé au-dessus de la chemise 29. Enfin, l'enceinte 28 comporte une paroi intérieure 33 définissant avec la paroi latérale de ladite enceinte, un conduit 34 ouvert à sa base et fermé à sa partie supérieure, l'orifice 5 étant situé dans la partie haute de ce conduit 34 ; en outre, la tuyère 32a la plus basse est disposée dans ledit conduit 34.

Quand le débit de vapeur à condenser est faible, un faible débit d'eau est nécessaire ; de ce fait, un faible nombre de tuyères 32 seront opérationnelles et le niveau d'eau se stabilisera à une faible hauteur dans la chambre 29. On notera que de par la présence de la paroi 33, la vapeur à condenser sera canalisée dans le conduit 34 et sera donc immanquablement soumis à l'action de la tuyère la plus basse. Si le débit de vapeur à condenser devient plus important, on augmente manuellement ou automatiquement le débit d'eau dans la même proportion et l'eau va monter dans la chambre 29 et rendre progressivement opérationnelles les tuyères situées dans des plans horizontaux disposés au-dessus du plan horizontal contenant la tuyère 32a ; le niveau de l'eau se stabilise quand suffisamment de tuyères sont rendues opérationnelles pour qu'elles évacuent l'eau introduite dans la chambre 29.

Il est possible de concevoir diverses variantes du condenseur des figures 6 et 7 sans pour autant sortie du cadre de l'invention. Ainsi, par exemple, la chemise 29 pourrait être disposée à l'intérieur de l'enceinte 28 ; il pourrait y avoir plusieurs chemises 29 indépendantes portant chacune une arrivée d'eau et associée chacune à des tuyères disposées à des hauteurs différentes ; ou encore la chemise 29 pourrait être remplacée par serpentin s'enroulant autour de la paroi latérale de l'enceinte, l'entrée d'un certain nombre de tuyères débouchant dans ce serpentin et ces tuyères étant situés dans des plans horizontaux différents.

Les figures précédentes illustrent des dispositifs fonctionnant comme des condenseurs par mélange. Il est bien certain toutefois que la conception de ces dispositifs resterait la même s'ils fonctionnaient en tant qu'absorbeurs de gaz ($SO_2$ ou $NH_3$ par exemple arrivant par le conduit (8) par un liquide (de l'eau par exemple arrivant par le conduit 4 ou 30.).

**0097560**

Revendications

1. Dispositif d'absorption d'un gaz tel que $NH_3$, $SO_2$ ou la vapeur d'eau, par un liquide tel que l'eau, constitué essentiellement par une enceinte (1) pourvue d'une arrivée (8) de gaz, de moyens de répartition (12,12a ; 17,17a,17b ; 27,27a,27b ; 32) tels des tuyères, alimentés en liquide assurant la répartition de ce liquide dans l'enceinte, d'un moyen d'extraction (9) du mélange liquide-gaz absorbé et d'un orifice (5) d'évacuation du gaz non absorbé, caractérisé en ce qu'il comporte en outre des moyens autonomes (2, 13, 14, 15) d'ajustement du nombre de moyens de répartition opérationnels en fonction du débit du liquide à répartir.

2. Dispositif selon la revendication 1, caractérisé en ce que les moyens d'ajustement sont constitués par une ou plusieurs chambres de réception (14, 15) du liquide dans chacune desquelles débouche l'entrée d'au moins un moyen de répartition (12, 12a), l'une (14) au moins desdites chambres étant en relation avec une arrivée (4) du liquide, lesdites entrées étant disposées dans un même plan horizontal ou en tout ou partie dans des plans horizontaux de niveaux différents, cette dernière condition devant nécessairement être remplie quand il n'y a qu'une chambre ou plusieurs chambres indépendantes, et des moyens étant éventuellement prévus pour assurer le déversement de liquide d'une chambre (14) vers l'autre (15).

3. Dispositif selon la revendication 2, caractérisé en ce que la chambre ou les chambres de réception du liquide (14, 15) sont disposées à l'intérieur et/ou à l'extérieur de l'enceinte (1).

4. Dispositif selon la revendication 3, caractérisé en ce que la chambre de réception de liquide (14) en relation avec l'arrivée de liquide (4) est pourvue d'une ouverture (10) raccordée à l'orifice (5) d'évacuation du gaz non absorbé par un conduit (11) qui s'étend en partie dans cette chambre, cette ouverture (10) étant de préférence située à proximité des moyens de répartition opérationnels en premier (12a).

5. Dispositif selon la revendication 3, caractérisé en ce que l'orifice (5) d'évacuation du gaz non absorbé est soit situé à proximité des moyens de répartition opérationnels en premier, soit en relation avec un conduit (11') débouchant à proximité des moyens de répartition opérationnels en premier (17b).

6. Dispositif selon la revendication 3, caractérisé en ce que l'enceinte (1) est scindée en deux compartiments indépendants, un compartiment supérieur (3) qui contient la ou les chambres de réception du liquide (14, 15), et dans lequel débouche l'arrivée de liquide (4) et un compartiment inférieur (7) qui porte le moyen d'extraction (9) et dans lequel débouche l'arrivée (8) de gaz à absorber.

7. Dispositif selon la revendication 3 ou 6, caractérisé en ce qu'il comporte au moins une chambre de réception du liquide en relation avec l'arrivée du liquide, les entrées des moyens de répartition débouchant dans chaque chambre étant disposées en tout ou partie dans des plans horizontaux de niveaux différents.

8. Dispositif selon la revendication 6, caractérisé en ce que le fond du compartiment supérieur (3) porte au moins un élément de séparation (13) qui définit dans ce compartiment au moins deux chambres de réception (14, 15) du liquide communiquant à leur partie supérieure.

9. Dispositif selon la revendication 6 ou 8, caractérisé en ce que le fond du compartiment supérieur (3) porte au moins un élément de séparation (19) qui s'étend de ce fond jusqu'à la paroi supérieure de l'enceinte pour définir au moins deux chambres de réception du liquide, ledit élément de séparation étant pourvu d'au moins un orifice de débordement (20) qui assure la communication entre les chambres de réception contiguës.

10. Dispositif selon l'une quelconque des revendications 6 à 9, caractérisé en ce que le fond du compartiment supérieur (3) est constitué par une plaque plane (2) disposée transversalement dans l'enceinte et qui porte les moyens de répartition (12, 12a).

11. Dispositif selon la revendication 10, caractérisé en ce que l'élément de séparation (13) est constitué par une virole.

12. Dispositif selon l'une quelconque des revendications 6 à 9, caractérisé en ce que le fond du compartiment supérieur (21) est constitué par une plaque (23) conformée en gradins sur une partie au moins de sa surface.

13. Dispositif selon la revendication 12, caractérisé en ce que la plaque (23) est constituée par deux séries de gradins convergeant vers le bas.

14. Dispositif selon la revendication 12, caractérisé en ce que la plaque (23) est constituée par des gradins concentriques convergeant vers le bas.

15. Dispositif selon l'une quelconque des revendications 6 à 14, caractérisé en ce que le compartiment supérieur (3 ; 21) est pourvu de l'orifice (5) d'évacuation du gaz non absorbé, le fond de ce compartiment supérieur ou la plaque (2 ; 23) constituant ce fond étant pourvu d'une ouverture (10) raccordée audit orifice (5).

16. Dispositif selon l'une quelconque des revendications 6 à 14, caractérisé en ce que le compartiment inférieur (7) est pourvu de l'orifice (5) d'évacuation du gaz non absorbé, cet orifice (5) étant situé à proximité du fond du compartiment supérieur ou en relation avec un conduit (11') débouchant sous et à proximité de ce fond.

17. Dispositif selon la revendication 15 ou 16, comportant plusieurs chambres de réception (14, 15) du liquide communiquant entre elles, caractérisé en ce que la chambre de réception (14) du liquide en relation avec l'arrivée de liquide (4) est celle dans laquelle débouchent les entrées des mcyens de répartition (12a) disposés à la distance la plus courte de ladite ouverture (10), dudit orifice (5) quand celui-ci est porté par le compartiment inférieur ou de l'extrémité libre du conduit (11') en relation avec ledit orifice.

18. Dispositif selon la revendication 17, caractérisé en ce qu'un déflecteur (16) est disposé autour de l'arrivée de liquide (4), ce déflecteur (16) s'ouvrant au-dessus de la chambre de réception (14) du liquide devant être en relation avec ladite arrivée de liquide (4).

19. Dispositif selon la revendication 15 ou 16 dans lequel le fond du compartiment supérieur est constitué par une plaque (23) conformée en gradins, caractérisé en ce qu'un déflecteur (25) est disposé autour de l'arrivée de liquide (4), ce déflecteur s'ouvrant au-dessus des mcyens de répartition (27) situés à la distance la plus courte de l'ouverture (10), de l'orifice (5) quand celui-ci est porté par le compartiment inférieur ou de l'extrémité libre du conduit (11') en relation avec cet orifice.

20. Dispositif selon la revendication 19, caractérisé en ce que l'ouverture (10), l'orifice (5) quand celui-ci est porté par le compartiment inférieur et l'extrémité libre du conduit (11') en relation avec cet orifice sont prévus au point le plus bas de la plaque (23).

21. Dispositif selon la revendication 3, caractérisé en ce que la ou les chambres de réception du liquide (29) sont montées, intérieurement et/ou extérieurement, sur la paroi latérale de l'enceinte (28).

22. Dispositif selon la revendication 21, caractérisé en ce que la ou les chambres de réception sont constituées par une ou plusieurs chemises (29) indépendantes s'étendant intérieurement ou extérieurement autour de la paroi latérale de l'enceinte ou par un ou plusieurs serpentins indépendants s'enroulant intérieurement ou extérieurement autour de la paroi latérale de l'enceinte, chaque chemise ou serpentin étant pourvu d'une arrivée de liquide (30) et les entrées des mcyens de répartition (32) débouchant dans chaque chemise ou serpentin à des hauteurs différentes.

23. Dispositif selon la revendication 21 ou 22, caractérisé en ce que l'enceinte (28) comporte une paroi intérieure (33) définissant avec la paroi latérale de ladite enceinte, un conduit ouvert à sa base et fermé à sa partie supérieure, l'orifice (5) d'évacuation du gaz non absorbé étant situé dans la partie haute de ce conduit, l'arrivée (8) de gaz à absorber débouchant dans l'enceinte en dehors de ce conduit et le ou les moyens de répartition (32a) opérationnels en premier étant disposés dans ledit conduit et dans un plan situé au-dessous dudit orifice (5).

24. Condenseur selon la revendication 23, caractérisé en ce que l'arrivée (8) de gaz à absorber débouche dans la partie haute de l'enceinte (28) et de préférence à un niveau situé au-dessus du ou des moyens de répartition opérationnels en dernier (32).

0097560

1 / 2

FIG.1

FIG.2

FIG.3

FIG.4

FIG.5

FIG.6

FIG. 7

Office européen
des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 274 336  (TJUTJUNNIKOV A.B.) | | B 01 D   53/18 |
| | --- | | |
| A | FR-A-2 373 313  (KRASNODARSKY POLITEKHNICHESKY INSTITUT) | | |
| | ----- | | |

**DOMAINES TECHNIQUES RECHERCHES (Int. Cl. ³)**

B 01 D   53/00
B 01 D    5/00

Le présent rapport de recherche a été établi pour toutes les revendications

| Lieu de la recherche | Date d'achèvement de la recherche | Examinateur |
|---|---|---|
| LA HAYE | 14-09-1983 | BOGAERTS M.L.M. |